# EUROPEAN PATENT APPLICATION

(11) **EP 2 107 756 A1**
(43) Date of publication of application: **07.10.2009**
(21) Application number: 08251219.5
(22) Date of filing: 31.03.2008
(51) Int. Cl.: H04L 29/06

(54) **Policy resolution**

(71) Applicant: British Telecommunications Public Limited Company, London Greater London EC1A 7AJ (GB)
(72) Inventor: The designation of the inventor has not yet been filed
(74) Representative: Lau, Chi-Fai

(57) **Abstract**

The present invention envisages a scenario where a device has several roots of trust (such as smart cards, SIM, TPM, etc) having conflicting policies but having overlapping resources that are necessary to perform a task. When the device has to perform a specific task or goal, the conflict between the policies in the devices can be resolved by selectively logically disconnecting roots of trust, together with the resources they deliver, up to the point where there are no conflicting policies with regard to the task whilst maintaining all the resources necessary to fulfil the task. Once the task is achieved, the roots of trust can be logically connected again.

## Description

### Field of the Invention

The present invention relates to a method for resolving policy conflicts in a device, in particular a method and system for resolving conflicts in policies resulting from a plurality of trusted platforms provided access to a number of resources, but where there are conflicting operational conditions in the trusted platforms.

### Background to the Invention

Convergent devices are becoming more common today. They share a common aim, which is to provide the user with access to multiple services using a single platform or device. Many laptops, PDAs and smartphones offer a converged experience. Such devices tend to operate at least one authentication resource and policy (a so-called "root of trust" or trusted component). In the case of a mobile phone, the root of trust is the subscriber identity module, or SIM card, which stores data including identifiers associated with the user and cryptographic keys for authentication of the device with the mobile network (resources) as well as the list of preferred and barred networks (policies).

In the future, devices will utilise more than one root of trust. For example, a device might include any of the following roots of trust: SIM, dual-SIM, trusted platform module (TPM), and smart cards, as well as software based policies. As a result, the device may find itself in a position where the policies and requirements imposed by each of the roots of trust are in conflict with each other, and thus prevent the device from operating properly. Thus, the device may not be able to reconcile its operation over all available policies. For example, while one SIM may require the device to use network X, another simultaneously active SIM may ban the device from using the same network X. If X happen to be the only network available or if X is necessary to achieve the goal, then such conflicting policies can prevent the device from reaching this goal.

The number of devices that hold different, conflicting policies is fuelled by the development of convergent networks and the associated proliferation of technologies for roots of trust. For example, the ability to have dual SIM, smart SD card and TPM may result in the device operating under four different policies. While inevitable from the technology development, this situation calls for solutions that remove the risk of paralysing devices resulting from conflicting rules.

International patent application WO 03/058880 describes a method of electronically distributing a password policy over a mobile communication system to a mobile unit. There may be conflicting policies if two certificate authorities certify the same key. The solution is to link the policy to the certificate and not the key.

### Summary of the Invention

It is the aim of embodiments of the present invention to overcome at least one of the above mentioned problems.

According to one aspect of the present invention, there is provided a mobile communication device comprising a resolution module and a plurality of trusted components, wherein
each trusted component is enabled and comprises at least one resource and a policy defining a condition for the operation of the trusted component;
the resolution module is adapted to receive a task for performance by the mobile communication device, wherein said task requires a resource from one of the trusted components and wherein there is a conflict in the policies of a plurality of the trusted components preventing access to the required resource;
wherein the resolution module is further adapted to resolve said conflict by selectively disabling each trusted component and the associated resource or resources, until there are no enabled trusted components with conflicting conditions that prevent access to the required resource.

Each resource may be associated with a trusted component is such that when the trusted component is disabled, the associated resource is also disabled.

Preferably each condition comprises a condition relating to the operation of said mobile communication device.

The resolution module may be adapted to, after the task has been performed by the mobile communications device, enable each disabled trusted component.

According to a second aspect of the present invention, there is provided a method for resolving conflicts in a mobile communication device comprising a resolution module and a plurality of trusted components, wherein each trusted component is enabled and comprises at least one resource and a policy defining a condition for the operation of the trusted component, said method comprising:
receiving at the resolution module a task for performance by the mobile communication device, wherein said task requires a resource from one of the trusted components and wherein there is a conflict in the policies of a plurality of the trusted components preventing access to the required resource;
resolving by the resolution module said conflict by selectively disabling each trusted component and the associated resource or resources, until there are no enabled trusted components with conflicting conditions that prevent access to the required resource.

### Brief Description of the Drawings

For a better understanding of the present invention reference will now be made by way of example only to the accompanying drawings, in which:

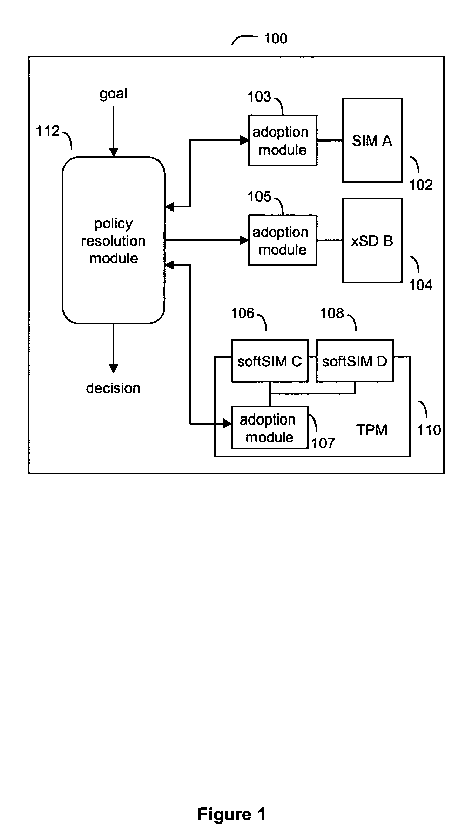

Figure 1 is a schematic of a device with multiple roots of trust.

### Description of the Preferred Embodiments

The present invention is described herein with reference to particular examples. The invention is not, however, limited to such examples.

The present invention envisages a scenario where a device has several roots of trust (such as smart cards, SIM, TPM, etc) having conflicting policies but having overlapping resources that are necessary to perform a task. When the device has to perform a specific task or goal, the conflict between the policies in the devices can be resolved by selectively logically disconnecting roots of trust, together with the resources they deliver, up to the point where there are no conflicting policies with regard to the task whilst maintaining all the resources necessary to fulfil the task. Once the task is achieved, the roots of trust can be logically connected again.

Figure 1 shows a converged device 100, such as a smart phone or PDA. The device 100 comprises four sources of policies and resources (our so-called "roots of trust"). In this example, the roots of trust are a SIM card SIM_A 102, a smart memory card xSD_B 104, and a TPM module 110 with two softSIM applications, softSIM_C 106 and softSIM_D 108.

Each root of trust can be thought of as a provider of resources for a device, where the resources are made available to the device on condition that the device fulfils certain obligations or conditions set out by policies specified by the root of trust. For example, the root of trust of a SIM might specify that the device can use its authenticating capabilities (resources) to access a mobile network provided that the device adheres to a certain conditions, such as preferred and barred network lists, preferred and barred numbers, etc. that form its policies.

Such obligations or conditions provided by a root of trust to the device can be generalised to have a form of 'access to resource x is activated if policy y is adhered to'. The obligation may be simple and cover the whole root of trust or there can be individual obligations for different components of the root of trust. For example, there may be one obligation regarding access to SIM authentication component and different separate obligation for accessing the phone book component on the SIM.

Each root of trust (SIM_A 102, xSD_B 104, softSIM_C 106 and softSIM_D 108 in Figure 1) has an associated adoption module. Device drivers in each of the adoption modules are responsible for translating internal obligation formats from within the associated root of trust (which may be in some proprietary format) to a common general format that can be understood by the policy resolution module 112. Thus, SIM_A 102 is provided with adoption module 103, which in turn is connected to the policy resolution module 112. xSD_B 104 is provided with adoption module 105, which in turn is also connected to the policy resolution module 112. And softSIM_C 106 and softSIM_D 108 are provided with adoption module 107 within the TPM 110, which is also connected to the policy resolution module 112.

Referring again to Figure 1, each of the roots of trust illustrated allows access to various network and at the same time also bans access to other networks. For example, SIM_A 102 allows access to the network X, but prohibits access to networks Y and Z; xSD_B 104 prohibits access to network X, but allows access to networks Y and Z; and the two TPM module applications, softSIM_C 106 which allows access to networks X and Y, but prohibits access to network Z, and softSIM_D which prohibits access to networks X and Y, but allows access to network Z.

Thus, the roots of trust have policies that apply to overlapping resources. In this example, the overlapping resources are networks X, Y and Z. That is to say, each root of trust has an associated policy that specifies the operation/access to each of networks X, Y and Z.

Table 1 below summarises the network access rights for each of the roots of trust.

**Table 1**

| **Root of trust** | **Network X** | **Network Y** | **Network Z** |
|---|---|---|---|
| SIM_A | Y | N | N |
| xSD_B | N | Y | Y |
| softSIM_C | Y | Y | N |
| softSIM_D | N | N | Y |

Each of the networks X, Y and Z may be a mobile network, a WiFi network or any other network including a LAN or similar. For this example, each network is a mobile network.

The device 100 is now given the task or goal by the user of making a call to a further device, and for that purpose the device must establish a connection with at least one network. The number of whose device is listed in both SIM_A 102 and xSD_B 104 address books. As such number are to be taken from one of the address books it is necessary for the device 100 to have access to resources of SIM_A 102 or xSD_B 104 to initiate the call. Note, the situation would be different if the device 100 had to establish a call to a new number, in which case no access to either address book is needed.

Initially, there are potentially three networks available, X, Y and Z over which the call can be made.

The device 100 then proceeds as follows:
1. First, the policy resolution module 112 takes the required task (making a call) and also the policies of each of the roots of trust as shown I Table 1.
2. As the required resource (the phone number) is a number listed in both SIM_A and xSD_B, the policy we need to adhere to is either that of SIM_A or xSD_B. Device 100 is not initially concerned with the policies of either softSIM_C 106 or softSIM_D 108, as neither of those roots of trust list the number required so that their resources (address books) are not needed for the call to be made.
3. However, there is a conflict between the policies specified by SIM_A 102 and xSD_B 104, to the extent that there is no common network that is available to both roots of trust that the device can select for use - see from Table 1 SIM A.
4. In the absence of any other factors, such as the possible priority settings, user preferences, signal strength, etc, the device policy resolution module 112 makes a decision to go with either one of SIM_A or xSD_B. In this example, the policy resolution module 112 selects SIM_A 102 and decides to logically disconnect xSD_B 104. As SIM_A 102 only allows access to network X, then by selecting SIM_A 102, device 100 is limited to using network X to make the call.
5. A consequence of selecting SIM_A 102 is that device 100 is allowed to use all the resources provided by SIM_A 102. However, as network X will be used, use of xSD_B 104 and softSIM_D 108 are disallowed as both their policies prohibit the use of network X. However, softSIM_C 106 can be used as its policy allows the use of network X, even if its resources are not immediately needed to initiate the connection.
6. Therefore, the policy resolution module 112 initiates a temporary disconnection of xSD_B 104 and softSIM_D 108 from the device 100. The disconnection results in the two associated policies being deactivated and the device 100 can act as if those two roots of trust are not present. The consequence of this is that the security and access rights of the device 100, authentication methods and services such as phone books and other applications are no longer available to the device 100. Available applications and services are updated to reflect the disconnection.
7. The device 100 can now complete the task of making a call to the other device using SIM_A 102 over network X, and utilising the address book provided by SIM_A 102.
8. Once the task is completed, the device 100 enables all sources of policies (each root of trust) again. Note however that the device 100 does not attempt to consolidate the different policies until a new task is set.

When logically disconnected, the resources provided by each root of trust are not available to the device 100. For example, if xSD_B 104 is disconnected because it prevents access to network X, then the resources provided by xSD_B 104 such as the authentication algorithms, keys, etc cannot be used to access that network even if via a different root of trust. Similarly, the other features on xSD_B 104 such as the phone address book, SATK applications, etc, are also not available.

In another example, consider the same device 100 fitted with the four roots of trust, SIM_A 102, xSD_B 104, softSIM_C 106 and softSIM_D 108, and each having the same policies with regard to network access that are specified in Table 1.

In a manner that is well specified in the GSM standards, such roots of trust can also be fitted with additional applications, for example a payment application that can be used to pay for goods over a remote connection linking the device to the merchant. Thus, in this example, each root of trust is also fitted with a separate payment application and that each application is compatible only with a specific payment institution or provider.

SIM_A 102 and softSIM_D 108 have a payment application P installed (i.e. an application compatible with payment provider P), and xSD_B 104 and softSIM_C 106 have payment application Q compatible with payment provider Q. Furthermore, payment application Q is associated with a policy that prevents the device 100 using application P, if application Q is available on the device.

Assuming that such device has to a goal to perform a payment with payment provider P and that only network X is currently available, the policy resolution module 112 determines the following conflict. There are only two roots of trust that allow for the use of network X, SIM_A 102 and softSIM_C 106, with the others prohibiting the use of network X. Therefore the policy resolution module 112 decides to logically disconnect the other roots of trust xSD_B 104 and softSIM_D 108, as otherwise the device 100 will not be able to access any network. However, this also disconnects associated resources, i.e. one application Q and one application P.

Fortunately, of two remaining roots of trust, SIM_A 102 offers application P and softSIM_C 106 offers application Q on condition that there is no application P available. Now, the policy resolution module 112 disconnects softSIM_C 106 and therefore its associated policy that bans application P. What is left is SIM_A 102 with application P that both allows access to the only available network, network X, and provides access to payment application P. Once the goal of making a payment with payment provider P is completed using payment application P provided by SIM_A 102, the other previously disconnected roots of trust can be reconnected.

Therefore, it is shown that when there are overlapping resources that are necessary to perform a task, but where those resources are maintained by conflicting policies, the policy resolution module can resolve the conflicts so that the task can be completed. Specifically, the policy resolution module can selectively logically disconnect roots of trust, together with the resources they deliver, up to the point where there are no conflicting policies with regard to the task whilst maintaining all the resources necessary to fulfil the task. Once the task is achieved, the roots of trust can be logically connected again.

It is noted herein that while the above describes examples of the invention, there are several variations and modifications which may be made to the described examples without departing from the scope of the present invention as defined in the appended claims. One skilled in the art will recognise modifications to the described examples.

## Claims

1. A mobile communication device comprising a resolution module and a plurality of trusted components, wherein
each trusted component is enabled and comprises at least one resource and a policy defining a condition for the operation of the trusted component;
the resolution module is adapted to receive a task for performance by the mobile communication device, wherein said task requires a resource from one of the trusted components and wherein there is a conflict in the policies of a plurality of the trusted components preventing access to the required resource;
wherein the resolution module is further adapted to resolve said conflict by selectively disabling each trusted component and the associated resource or resources, until there are no enabled trusted components with conflicting conditions that prevent access to the required resource.

2. A method according to claim 1, wherein each resource associated with a trusted component is such that when the trusted component is disabled, the associated resource is also disabled.

3. A method according to claim 1 or claim 2, wherein each condition comprises a condition relating to the operation of said mobile communication device.

4. A method according to any preceding claim, wherein the resolution module is adapted to, after the task has been performed by the mobile communications device, enable each disabled trusted component.

5. A method for resolving conflicts in a mobile communication device comprising a resolution module and a plurality of trusted components, wherein each trusted component is enabled and comprises at least one resource and a policy defining a condition for the operation of the trusted component, said method comprising:
receiving at the resolution module a task for performance by the mobile communication device, wherein said task requires a resource from one of the trusted components and wherein there is a conflict in the policies of a plurality of the trusted components preventing access to the required resource;
resolving by the resolution module said conflict by selectively disabling each trusted component and the associated resource or resources, until there are no enabled trusted components with conflicting conditions that prevent access to the required resource.
